# EUROPÄISCHE PATENTSCHRIFT

(11) **EP 2 051 835 B1**
(45) Veröffentlichungstag und Bekanntmachung des Hinweises auf die Patenterteilung: **22.06.2011**
(21) Anmeldenummer: 07784623.6
(22) Anmeldetag: 16.08.2007
(51) Int. Cl.: B25C 5/11

(54) **NAGELVORRICHTUNG**
NAILING DEVICE
DISPOSITIF DE CLOUAGE

(30) Priorität: 16.08.2006 AT 6192006 U
(43) Veröffentlichungstag der Anmeldung: 29.04.2009
(73) Patentinhaber: Leitner, Helmut, 2285 Leopoldsdorf (AT)
(72) Erfinder: Leitner, Helmut, 2285 Leopoldsdorf (AT)
(74) Vertreter: Sonn & Partner Patentanwälte
(86) Internationale Anmeldenummer: PCT/AT2007/000394
(87) Internationale Veröffentlichungsnummer: WO 2008/019418

(56) Entgegenhaltungen:
- WO-A-00/56505
- DE-U1- 9 016 493
- US-A- 3 104 395
- US-A- 4 096 982
- US-A- 4 784 306
- US-A1- 2002 050 506

## Beschreibung

Die Erfindung betrifft eine Nagelvorrichtung für in Form eines Coils über zumindest einen Draht gegurtete Nägel, deren Köpfe einander teilweise überlappen, mit einem oberen Teil, der an seinem einen Ende als Hammergriff ausgebildet ist und an seinem anderen Ende einen Winkelanschlag aufweist, und einem gelenkig mit dem oberen Teil verbundenen Hebelteil, der ein Nagelmagazin, einen Hammerkopf und eine Nagelvorschub- bzw. -führungseinrichtung enthält, wobei der Hammerkopf einen Schlagkanal aufweist, in dem ein Schlagbolzen geführt ist, und wobei die Nagelvorschub- bzw. -führungseinrichtung einen Kulissenhebel aufweist, der auf einer Welle am Hammerkopf gelagert ist und der bei Betätigung der Nagelvorrichtung einen Vorschubkörper mit mindestens einer Vorschubklaue in einer Öffnung im Hammerkopf verschiebt, und im entspannten Zustand der Nagelvorrichtung, der obere Teil und der Hebelteil durch ein federndes Element bis zu einem Anschlag auseinandergedrückt sind.

Eine derartige Nagelvorrichtung ist beispielsweise aus der WO 00/56505 A bekannt.

Derartige Nagelvorrichtungen funktionieren einwandfrei, sofern noch eine Vielzahl von Nägeln auf dem Coil aufgegurtet sind, da zu Beginn des Abrollens des Nagelcoils die Nagelspitzen radial außen liegender Nägel des Coils unmittelbar an einen Unterteil des Nagelmagazins angrenzen. Bei Verwendung der Nagelvorrichtung, d.h. Aufbringen einer Schlagkraft, werden diese Nägel demzufolge kaum in Bewegung versetzt, da sie ohnedies an den Magazinunterteil angrenzend angeordnet sind. Sofern jedoch nur noch eine geringere Anzahl von zirka 20 Nägeln und weniger vorhanden ist, wird der Abstand zum Magazinunterteil kontinuierlich größer. Durch die Vergrößerung des Abstands vom Magazinunterteil vergrößert sich das freie Bewegungsspiel für die Nägel, so dass beim Aufbringen der Schlagkraft die Drahtverbindungen des Nagelcoils dermaßen beansprucht werden, dass häufig ein Verhaken der Nägel auftritt.

Um die Nägel in dem Nagelmagazin besser zu führen ist es auch bereits bekannt einen Wickelkern im Inneren des Coils zu platzieren und somit die beim Nageln auftretenden Kräfte in Richtung des Magazinunterteils aufzufangen. Nachteilig ist bei dem Vorsehen eines derartigen Wickelkerns jedoch, dass der Wickelkern häufig beim Austauschen des Nagelcoils entfernt wird und somit nicht gewährleistet ist, dass nach dem Einsetzen eines neuen Nagelcoils die Nägel weiterhin im Nagelmagazin stabilisiert sind.

Weiters ist aus der US 3 104 395 A1 eine automatische Nagelvorrichtung bekannt, welche pneumatisch bzw. durch Flüssigkeitsdruck betrieben wird. Ein Kolben und ein daran angebrachter Nageleintreibstößel übertragen den ausgeübten Druck auf einen Nagel, der durch obere und untere Kugelumlaufelemente, welche teilweise in die Bohrung des Nagelhaltefachs ragen, genau ausgerichtet wird. Ein Magnet zieht den Nagel an, so dass dieser eine Position einnimmt, die im Wesentlichen in der Mitte der Bohrung liegt. Eine Stabilisierung der Nägel in ihrer gegurteten Stellung im Nagelmagazin wird hiedurch jedoch nicht erreicht.

Aus der DE 90 16 493 U1 ist ein Nageleintreibgerät bekannt, welches Nägel, die in einem Magazin aufbewahrt sind, nacheinander in einen Austreibkanal überführt. Um ein Herunterfallen der Nägel bis zum Austreibvorgang zu verhindern, und um auch den letzten Nagel eines Nagelstreifens oder -coils in den Austreibkanal zu überführen, ist ein Magnet an der der Einlassöffnung gegenüberliegenden Seite angeordnet, der die Nägel seitlich fixiert. Auch hiedurch wird jedoch keine Stabilisierung des Nagelcoils im Nagelmagzin erzielt.

Aus der US 4 096 982 A1 ist eine andersartige automatische Ausgabevorrichtung für mehrere Nägel mit einem Behälter bekannt, in dem die Nägel nicht in Form eines gegurteten Coils vorgesehen sind, sondern eine Vielzahl von Streifen oder Reihen von Nägeln aufbewahrt wird. Durch Druck auf einen Kopfteil eines Stößels wird ein vorderster Nagel eines Streifens gelöst und in die Arbeitsoberfläche eingebracht. Die Ausgabevorrichtung weist eine Keilplatte mit einem Magneten auf, über welche eine separate Reihe Nägel vorwärts geschoben wird. Ein weiterer Magnet ist im Bereich eines Ausgabekanals vorgesehen, über den der vorderste Nagel in den Ausgabekanal gezogen wird.

Ziel der vorliegenden Erfindung ist hingegen die im Nagelmagazin aufgenommenen Nägel des Nagelcoils, insbesondere auch wenn der Nagelcoil nur noch eine geringe Anzahl von Nägeln umfasst, gegen die beim Nageln auftretenden Schlagkräfte zu stabilisieren und somit ein Verhaken der Nägel untereinander zu verhindern.

Dies wird bei der Nagelvorrichtung der eingangs angeführten Art dadurch erzielt, dass dem Nagelmagazin zumindest ein Stabilisierungselement zugeordnet ist, über welches die Nägel mittels Magnetkraft in ihrer gegurteten Stellung stabilisiert werden. Durch das Vorsehen eines dem Nagelmagazin zugeordneten Stabilisierungselements, über welches die Nägel mittels einer Magnetkraft zuverlässig in ihrer vorbestimmten, zueinander fest ausgerichteten gegurteten Stellung gehalten werden, kann zuverlässig ein Verhaken der Nägel untereinander bzw. Querlegen der Nägel im Nagelmagazin verhindert werden. Der Benutzer der Nagelvorrichtung braucht hierbei vorteilhafterweise beim Einsetzen eines neuen Nagelcoils nicht darauf achten, eine zusätzliche Stabilisierungsvorrichtung wie z.B. einen Wickelzylinder einzusetzen, da das Stabilisierungselement ohnedies dem Nagelmagazin zugeordnet ist. Demzufolge wird hierdurch zuverlässig ein Verhaken der Nägel auch bei einer geringen Anzahl von im Nagelmagazin verbleibenden Nägeln verhindert.

Eine konstruktiv einfache Möglichkeit zur Stabilisierung der Nägel in ihrer gegurteten Stellung mittels einer Magnetkraft ist gegeben, wenn ein den Köpfen der Nägel des Nagelcoils benachbart angeordnetes Magazinoberteil zumindest einen Permanentmagnet als Stabilisierungselement aufweist.

Um die Magnetkraft über den gesamten Umfang des Nagelmagazins möglichst gleichmäßig auf die Nägel aufzubringen ist es von Vorteil, wenn in dem Magazinoberteil mehrere, vorzugsweise umfangseitig gleichmäßig verteilt angeordnete, Permanentmagnete vorgesehen sind.

Wenn das Magazinoberteil Aussparungen zur Aufnahme der Permanentmagnete aufweist, können die Permanentmagnete auf einfache Weise in dem Magazinoberteil formschlüssig gehalten werden.

Um nach Möglichkeit Eindrücke auf der den Nägelköpfen zugewandten Innenseite des Magazinoberteils zu vermeiden, welche den Abrollvorgang des Nagelcoils behindern könnten und somit wiederum zu einer Blockade im Nagelmagazin führen könnten, ist es günstig, wenn das Magazinoberteil eine Befestigungsplatte mit zumindest zwei Lagen aufweist, wobei eine den Nagelköpfen zugewandte Lage aus einem härteren Material als die andere(n) Lage(n) besteht.

Wenn die den Nagelköpfen zugewandte Lage aus einem nicht-magnetisierbaren Stahl, z.B. Austenit, besteht, ist die den Nagelköpfen zugewandte Innenseite des Magazinoberteils härter als die Nägelköpfe selbst, so dass jegliche Eindrücke zuverlässig vermieden werden. Darüber hinaus wird durch das Vorsehen eines nicht-magnetisierbaren Stahls vermieden, dass der Verlauf des magnetischen Felds behindert wird, wie dies beispielsweise bei einem unlegierten Stahlblech der Fall wäre.

Um die auf die Nägel wirkende Magnetkraft der Permanentmagnete möglichst nicht zu schwächen, ist es günstig, wenn in der zweiten Lage, die vorzugsweise aus Kunststoff, insbesondere Polyamid, besteht, die Aussparungen zur Aufnahme der Permanentmagnete vorgesehen sind, so dass die Permanentmagnete direkt auf der unteren Lage aufliegen.

Zum Erzeugen eines magnetischen Felds, welches die Nägel zuverlässig in ihrer vorbestimmten, zueinander ausgerichteten gegurteten Stellung stabilisiert, ist es günstig, wenn die Permanentmagnete aus einer Neodym-Eisen-Borlegierung bestehen. Tests haben gezeigt, dass es insbesondere zweckmäßig ist, wenn die Permanentmagnete eine Haltekraft zwischen 10 N/mm² und 30 N/mm², vorzugsweise von im Wesentlichen 20 N/mm², aufweisen. Um das Gewicht der Nagelvorrichtung nicht unnötig zu erhöhen und dennoch ein ausreichend starkes magnetisches Feld zu erzeugen ist es vorteilhaft, wenn die Permanentmagnete zylindrisch ausgebildet sind, und vorzugsweise einen Durchmesser zwischen 5 mm und 15 mm, insbesondere von ca. 10 mm, und eine Höhe von zwischen 1 mm und 3 mm, insbesondere von ca. 2 mm aufweisen.

Um beim Ausstoßen aus dem Schlagkanal, insbesondere des letzten Nagels, ein schräges Ausstoßen zu verhindern, da der letzte Nagel eines Nagelcoils aufgrund der fehlenden Führung durch die Verbindung zu einer Vielzahl anderer Nägel zu einer Schrägstellung neigt, ist es günstig, wenn der Schlagbolzen zumindest in einem vorderen Auflagebereich ein magnetisches Material aufweist. Hierdurch richtet sich der Nagelkopf automatisch zu dem Auflagebereich des Schlagbolzens aus, so dass sich der Nagel im Schlagkanal ausrichtet, sobald er in den Einflussbereich des magnetischen Materials des Schlagbolzens gelangt.

Um einem Verhaken der Nägel über eine Verbindung untereinander entgegenzuwirken, ist es günstig, wenn die gegurteten Nägel über zwei Drähte miteinander verbunden sind, wobei die Drähte vorzugsweise eine Festigkeit von zwischen 510 N/mm² und 610 N/mm², vorzugsweise von im Wesentlichen 560 N/mm², aufweisen.

Die Erfindung wird nachstehend anhand von einem in den Zeichnungen dargestellten bevorzugten Ausführungsbeispiel, auf das sie jedoch nicht beschränkt sein soll, noch näher erläutert. Im Einzelnen zeigen in der Zeichnung:
Fig. 1 eine auseinandergezogene perspektivische Ansicht einer Nagelvorrichtung;
Fig. 2 eine schematische Ansicht der Nagelvorrichtung, insbesondere der Vorschub- bzw. -führungseinrichtung;
Fig. 3 eine Schnittansicht des Schlagkanals sowie der Vorschub- bzw. -führungseinrichtung;
Fig. 4 eine Schnittansicht gemäß der Linie IV-IV in Fig. 3;
Fig. 5 eine Schnittansicht des Nagelmagazins;
Fig. 6 eine Schnittansicht einer Befestigungsplatte des Magazinoberteils; und
Fig. 7 eine Ansicht des Schlagbolzens.

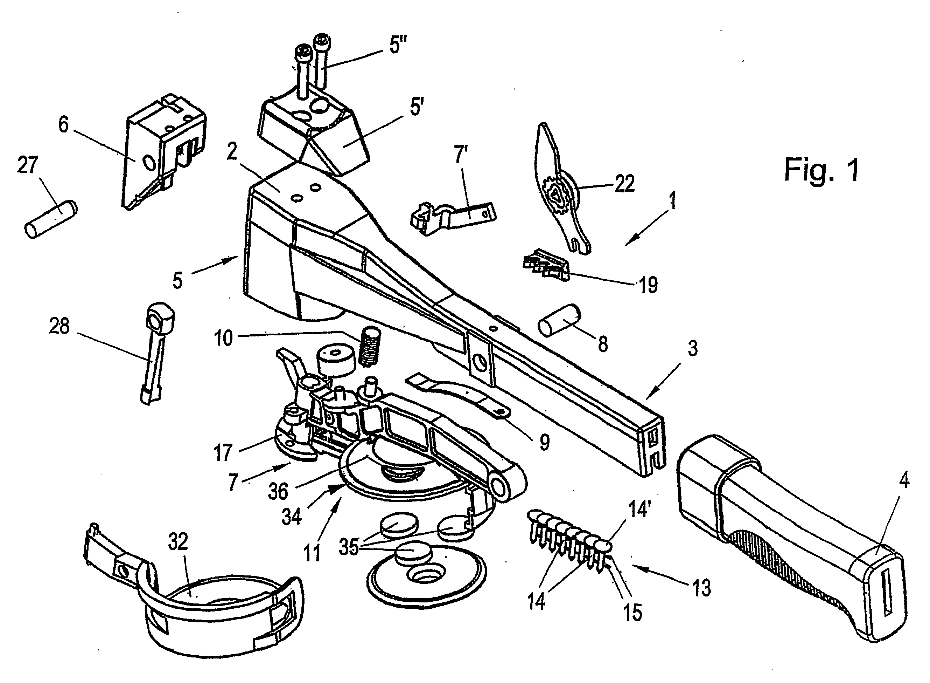

In Fig. 1 ist eine Nagelvorrichtung 1 mit einem oberen Teil 2 gezeigt, an dem an einem Ende 3 ein Hammergriff 4 und an dem gegenüberliegenden Ende 5 ein Winkelanschlag 6 vorgesehen ist. An der Oberseite des oberen Teils 2 ist im Endbereich 5 ein Schlagblock 5' über zwei Schrauben 5" befestigt.

An dem oberen Teil 2 ist ein Hebelteil 7 gelenkig gelagert, wobei hierzu eine Achse 8 im oberen Teil 2 aufgenommen ist. Weiters ist ein Verbindungshebel 7' ersichtlich. Um den Hebelteil 7 in einem entspannten Zustand in einer von dem oberen Teil 2 beabstandeten Position zu halten, sind eine Blattfeder 9 sowie eine Spiralfeder 10 vorgesehen.

Der Hebelteil 7 weist ein Nagelmagazin 11 auf, in welchem ein Nagelcoil 13 aufgenommen ist, welcher eine Vielzahl von Nägel 14 mit Nagelköpfen 14', die über zwei Verbindungsdrähte 15 aneinander gegurtet sind, aufweisen.

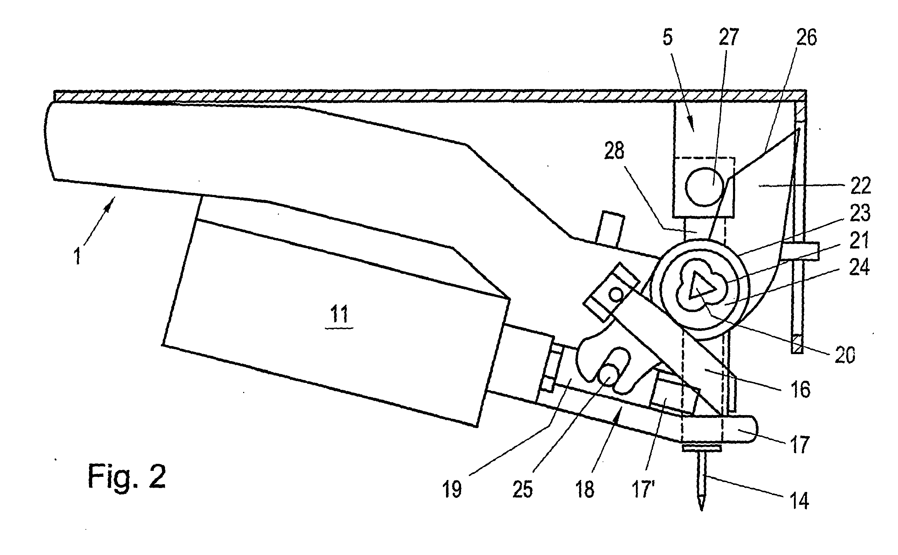

In den schematischen Darstellungen der Fig. 2 bis 4 ist die grundsätzliche Funktionsweise der Nagelvorrichtung 1 ersichtlich. Hierin ist gezeigt, dass ein Nagel 14 über einen Schlagkanal 16 ausgebracht wird und mit Hilfe eines Hammerkopfs 17 in einen Untergrund eingeschlagen werden kann. Im Hammerkopf 17 ist eine Öffnung 17' vorgesehen, in der ein Vorschubkörper 19 einer Nagelvorschub- bzw. -führungseinrichtung 18 verschiebbar eingesetzt ist.

Weiters ist der Hammerkopf 17 fest mit einer im Querschnitt dreieckigen Welle 20 verbunden, die drehfest in eine sternförmige Buchse 21 eingreift und durch eine Ausnehmung im Kulissenhebel 22 ragt. Die Ausnehmung ist von einem ringförmigen Ansatz 23 begrenzt und der Bereich zwischen der Begrenzung der Ausnehmung und der sternförmigen Buchse 21 sowie zwischen dem ringförmigen Ansatz 23 und der Buchse 21 ist mit Gummi 24 ausgefüllt.

Der Kulissenhebel 22 ist an einem Ende gabelförmig ausgebildet und umgreift mit dieser Gabel einen Bolzen 25, der mit dem Vorschubkörper 19 fest verbunden ist, so dass bei Verdrehen des Kulissenhebels 22 die Gabel des Kulissenhebels 22 über den Bolzen 25 den Vorschubkörper 19 verschiebt. Auf dem dem Vorschubkörper 19 abgewandten Ende des Kulissenhebels 22 ist eine Auflauffläche 26 vorgesehen, die bei Betätigung der Nagelvorrichtung 1 am Auflaufbolzen 27, der im Winkelanschlag 6 gelagert ist, entlanggleitet und dadurch den Kulissenhebel 22 verschwenkt. Gleichzeitig ist am Auflaufbolzen 27 ein Schlagbolzen 28 gelagert.

Sobald die Nagelvorrichtung 1 betätigt wird, wird der Kulissenhebel 22 gegen die elastische Kraft des Gummis 24 verdreht. Ist der Nagelvorgang beendet, so wird der Schlagbolzen 28 im Schlagkanal 16 hochgezogen und die unter Spannung befindliche Gummimasse 24 stellt den Kulissenhebel 22 in eine entspannte Position zurück. Dabei gleitet die Auflauffläche 26 des Kulissenhebels 22 am Auflaufbolzen 27 zurück und der Vorschubkörper 19 wird in seine vordere Position nahe dem Schlagkanal 16 im Hammerkopf 17 gebracht, um den nächsten Nagel im Schlagkanal 16 zu positionieren.

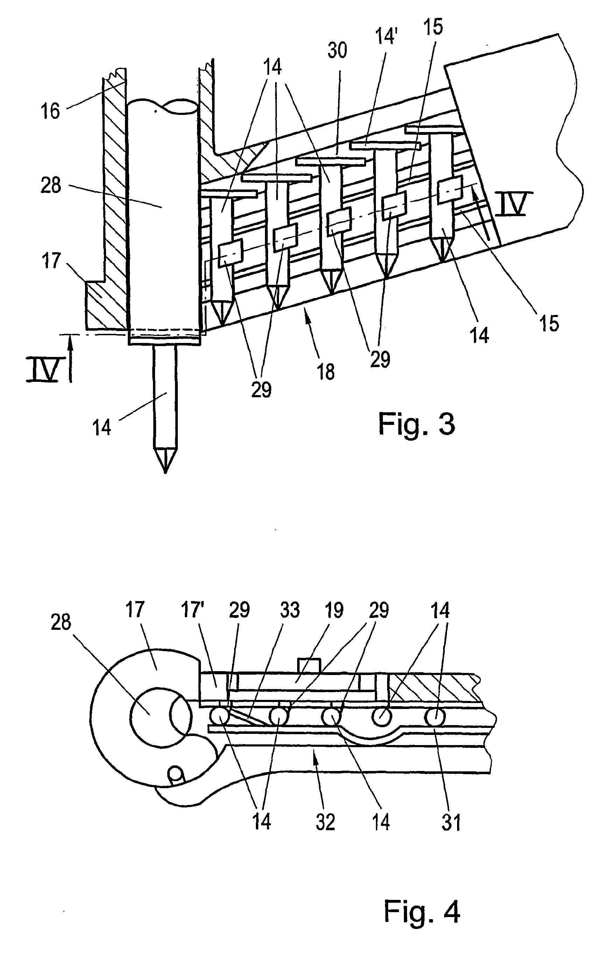

Bei der in Fig. 2 gezeigten Position, bei der gerade ein Nagel 14 eingeschlagen wird, d.h., der auf dem Lagerbolzen bzw. im vorliegenden Fall auch Auflaufbolzen 27 gelagerte Schlagbolzen 28 befindet sich in seiner tiefsten Position im Schlagkanal 16 und schlägt den darin befindlichen Nagel 14 aus der Vorrichtung in das zu nagelnde Material. Der Vorschubkörper 19 ist über den Bolzen 25 vom Kulissenhebel 22 in der Öffnung 18 des Hammerkopfes 17 zurückgeschoben, so dass weder der Vorschubkörper 19 noch eine daran befestigte Vorschubklaue 29 (vgl. Fig. 3) den Schlagbolzen 28 beim Herausschlagen des Nagels 14 behindern. Der zwischen der sternförmigen Buchse 21 und dem ringförmigen Ansatz 23 sowie der dahinterliegenden Ausnehmung des Kulissenhebels 22 befindliche Gummi 24 ist in dieser Position gespannt und sorgt für eine Rückstellung des Vorschubkörpers 19 beim Entlasten der Nagelvorrichtung 1, wobei die auf dem Vorschubkörper 19 angebrachten Vorschubklauen 29 Nägel 14 in Richtung Schlagkanal 16 führen.

In Fig. 3 ist detailliert die Vorschubeinrichtung 18 von der anderen Seite gesehen dargestellt. Der Schlagbolzen 28 befindet sich auch in dieser Darstellung in seiner tiefsten Position im Schlagkanal 16 im Hammerkopf 17. Der Nagel 14 wird in diesem Moment in das zu nagelnde Material eingeschlagen. Kurz bevor es zum Einschlagen des Nagels 14, der sich im Schlagkanal 16 befindet, kommt, d.h. kurz bevor der Schlagbolzen 28 seine tiefste Position im Schlagkanal 16 erreicht, wird der Nagel 14 freigegeben, indem der Vorschubkörper 19 zurückgezogen wird, so dass in dem Moment des Einschlagens weder die vordere Kante des Vorschubkörpers 19 noch die vorderste Vorschubklaue 29 in den Schlagkanal 16 ragen, so dass der Schlagbolzen 28 beim Einschlagen des Nagels 14 nicht behindert wird. Die weiteren Nägel 14 sind mit Verbindungsdrähten 15 zu einem Coil bzw. Nagelband 13 verbunden und die Nagelköpfe 14' werden in einer Nut 30, die zumindest im Hammerkopf 17 vorgesehen ist, geführt.

In der Fig. 4 sieht man im Schlagkanal 16 den Schlagbolzen 28, der in seiner tiefsten Position im Schlagkanal 16 ist, d.h. es ist, wie in Fig. 3, der Moment dargestellt, in dem gerade ein Nagel 14 eingeschlagen wurde und die Nagelvorrichtung 1 noch nicht entspannt ist. Der Vorschubkörper 19 wird von dem hier nicht dargestellten Kulissenhebel 22 über den Bolzen 25 in zurückgeschobener Position in der Öffnung 18 gehalten. Die Vorschubklauen 29 befinden sich hinter den vordersten drei Nägeln 14. Von der anderen Seite werden die Nägel 14 im Bereich ihrer Schäfte von einer Rückhaltefeder 31 geführt, die an einem Magazinunterteil 32 befestigt und abgestützt ist. Bei Entspannung der Nagelvorrichtung 1 geht der Schlagbolzen 28 im Schlagkanal nach oben, der Kulissenhebel 22 wird vom Gummi 24 zurückgestellt und schiebt den Vorschubkörper 19 und damit auch das Nagelband 13 mit den Nägeln 14 nach vorne, so dass der vorderste Nagel 14 in den Schlagkanal 16 gelangt und der nächstfolgende Nagel 14 vor der Rückhalteklaue 33 positioniert wird. Beim Eintreiben des im Schlagkanal 16 befindlichen Nagels 14 wird der Vorschubkörper 19 wieder nach hinten geschoben, wobei die Rückhalteklaue 33 verhindert, dass die Nägel 14 dabei nach hinten gezogen werden. Die Rückhaltefeder 31 weicht mit den Nägeln 14 aus, damit die Vorschubklauen 29 nach hinten, an den Nägeln 14 vorbei, gezogen werden können.

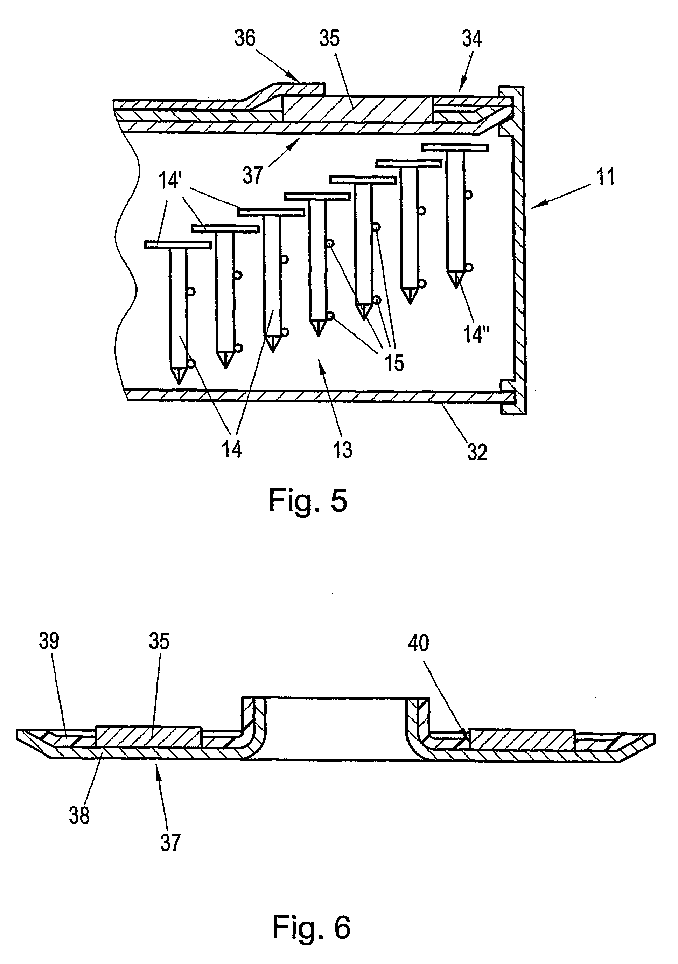

Durch die bei dem voranstehend beschriebenen Schlagvorgang frei werdenden Kräfte werden die Verbindungen zwischen den Drähten 15 und den Nägeln 14 beansprucht (vgl. Fig. 5). Insbesondere wird die Beanspruchung umso größer, je weniger Nägel 14 noch auf dem Nabelband bzw. -coil 13 aufgegurtet sind, da sich beim Abrollen des Nagelcoils 13 der Abstand der Nagelspitzen 14" zum Magazinunterteil 32 stetig vergrößert. Um die freie Beweglichkeit der im Nagelmagazin 11 aufgenommenen Nägel 14 zu beschränken bzw. die Nägel 14 im Nagelmagazin 11 zu stabilisieren, sind in einem Magazinoberteil 34 bei dem gezeigten Ausführungsbeispiel drei Permanentmagnete 35 aufgenommen. Hierbei handelt es sich um zylindrische Flachmagnete mit einer Abmessung von ca. 10 x 2 mm, welche in Passungen 36 im Magazinoberteil 34 (vgl. Fig. 1) aufgenommen werden.

Die in Fig. 1 gezeigten drei Permanentmagnete 35 werden vorteilhafterweise bei einer Nagelvorrichtung 1, bei welcher Nägel 14 zwischen 16 bis 19 mm eingesetzt werden, vorgesehen, wobei bei einer Nagelvorrichtung, bei welcher Nägel 14 mit einer Länge von 22 bis 25 mm eingesetzt werden, vorteilhafterweise vier Permanentmagnete 35 vorgesehen sind.

Wie insbesondere in Fig. 6 ersichtlich, ist zur Aufnahme der Permanentmagnete 35 eine in einer Sandwich-Konstruktion hergestellte Befestigungsplatte 37 vorgesehen, welche eine untere, den Nägelköpfen 14' zugewandte Lage 38 aus einem nicht-magnetischen Stahl aufweist und eine obere Lage 39 aus einem Kunststoffmaterial, insbesondere einem Polyamid-Kunststoff, mit Aussparungen 40 zur Aufnahme der Permanentmagnete 35. Durch das Vorsehen eines nicht-magnetischen Stahls für die Lage 38 ist einerseits ein ausreichend hartes Material vorgesehen, welches verhindert, dass die Nagelköpfe 14' Eindrücke an der den Nagelköpfen 14' zugewandten Oberfläche hinterlassen, welche ein ungehindertes Abrollen des Nagelcoils 13 behindern könnten. Zugleich wird durch das nicht-magnetische Stahlmaterial der Verlauf des Magnetfelds der Permanentmagnete 35 nicht beeinflusst.

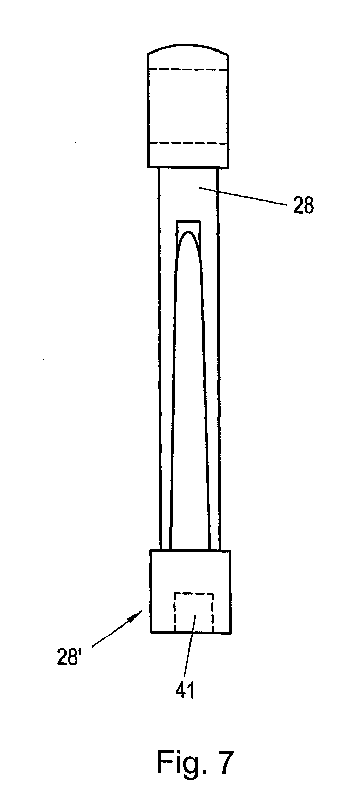

In Fig. 7 ist noch der Schlagbolzen 28 im Detail gezeigt, wobei insbesondere ersichtlich ist, dass an einer vorderen Stirnfläche 28' ein Permanentmagnet 41 mittels eines Presssitzes befestigt ist. Mit Hilfe des Permanentmagnets 41 wird ein letzter Nagel 14 eines Nagelcoils 13, der aufgrund der fehlenden Führung durch die Vergurtung mit weiteren Nägeln 14 im Schlagkanal 16 häufig schräg zu liegen kommt, bei der Abwärtsbewegung des Schlagbolzens 28 durch die Magnetkraft des Permanentmagneten 41 automatisch gerade gestellt und mit Hilfe der Magnetkraft fixiert. Hiermit ist ein optimales Nagelbild am Befestigungsteil auch beim letzten Nagel gewährleistet.

Wesentlich ist jedoch lediglich, dass die Nägel 14 im Nagelmagazin 11, insbesondere wenn sich nur noch eine geringe Anzahl von Nägel 14 am Nagelcoil 13 befindet, mittels einer Magnetkraft stabilisiert werden um ein Verhaken der Nägel 14 zu verhindern.

## Patentansprüche

1. Nagelvorrichtung (1) für in Form eines Coils (13) über zumindest einen Draht (15) gegurtete Nägel (14), deren Köpfe (14') einander teilweise überlappen, mit einem oberen Teil (2), der an seinem einen Ende (3) als Hammergriff (4) ausgebildet ist und an seinem anderen Ende (5) einen Winkelanschlag (6) aufweist, und einem gelenkig mit dem oberen Teil (2) verbundenen Hebelteil (7), der ein Nagelmagazin (11), einen Hammerkopf (17) und eine Nagelvorschub- bzw. -führungseinrichtung (18) enthält, wobei der Hammerkopf (17) einen Schlagkanal (16) aufweist, in dem ein Schlagbolzen (28) geführt ist, und wobei die Nagelvorschub- bzw. -führungseinrichtung (18) einen Kulissenhebel (22) aufweist, der auf einer Welle (27) am Hammerkopf (17) gelagert ist und der bei Betätigung der Nagelvorrichtung (1) einen Vorschubkörper (19) mit mindestens einer Vorschubklaue (29) in einer Öffnung (17') im Hammerkopf (17) verschiebt, und im entspannten Zustand der Nagelvorrichtung (1), der obere Teil (2) und der Hebelteil (7) durch ein federndes Element (9, 10) bis zu einem Anschlag auseinandergedrückt sind, **dadurch gekennzeichnet, dass** dem Nagelmagazin (11) zumindest ein Stabilisierungselement zugeordnet ist, über welches die Nägel (14) mittels Magnetkraft in ihrer gegurteten Stellung stabilisiert werden.

2. Nagelvorrichtung nach Anspruch 1, **dadurch gekennzeichnet, dass** ein den Nagelköpfen (14') des Nagelcoils (13) benachbart angeordnetes Magazinoberteil (34) zumindest einen Permanentmagnet (35) als Stabilisierungselement aufweist.

3. Nagelvorrichtung nach Anspruch 2, **dadurch gekennzeichnet, dass** in dem Magazinoberteil (34) mehrere, vorzugsweise umfangseitig gleichmäßig verteilt angeordnete, Permanentmagnete (35) vorgesehen sind.

4. Nagelvorrichtung nach Anspruch 3, **dadurch gekennzeichnet, dass** das Magazinoberteil (34) Aussparungen (36, 40) zur Aufnahme der Permanentmagnete (35) aufweist.

5. Nagelvorrichtung nach einem der Ansprüche 2 bis 4, **dadurch gekennzeichnet, dass** das Magazinoberteil (34) eine Befestigungsplatte (37) mit zumindest zwei Lagen (38, 39) aufweist, wobei eine den Nägelköpfen (14') zugewandte Lage aus einem härteren Material als die andere(n) Lage(n) besteht.

6. Nagelvorrichtung nach Anspruch 5, **dadurch gekennzeichnet, dass** die den Nagelköpfen (14') zugewandte Lage (38) aus einem nicht magnetisierbaren Stahl, z.B. Austenit, besteht.

7. Nagelvorrichtung nach Anspruch 5 oder 6, **dadurch gekennzeichnet, dass** in der zweiten Lage (39), die vorzugsweise aus Kunststoff, inbesondere Polyamid, besteht, die Aussparungen (40) zur Aufnahme der Permanentmagnete (35) vorgesehen sind, so dass die Permanentmagnete (35) direkt auf der ersten Lage (38) aufliegen.

8. Nagelvorrichtung nach einem der Ansprüche 2 bis 7, **dadurch gekennzeichnet, dass** die Permanentmagnete (35) aus einer Neodym-Eisen-Borlegierung bestehen.

9. Nagelvorrichtung nach einem der Ansprüche 2 bis 8, **dadurch gekennzeichnet, dass** die Permanentmagnete (35) eine Haltekraft zwischen 10 N/mm² und 30 N/mm², vorzugsweise von im Wesentlichen 20 N/mm², aufweisen.

10. Nagelvorrichtung nach einem der Ansprüche 2 bis 9, **dadurch gekennzeichnet, dass** die Permanentmagnete (35) zylindrisch ausgebildet sind, und vorzugsweise einen Durchmesser zwischen 5 mm und 15 mm, insbesondere von ca. 10 mm, und eine Höhe von zwischen 1 mm und 3 mm, insbesondere von ca. 2 mm, aufweisen.

11. Nagelvorrichtung nach einem der Ansprüche 2 bis 10, **dadurch gekennzeichnet, dass** der Schlagbolzen (28) zumindest in einem vorderen Auflagebereich (28') ein magnetisches Material (41) aufweist.

12. Nagelvorrichtung nach einem der Ansprüche 1 bis 11, **dadurch gekennzeichnet, dass** die gegurteten Nägel (14) über zwei Drähte (15) miteinander verbunden sind, wobei die Drähte (15) vorzugsweise eine Festigkeit von zwischen 510 N/mm² und 610 N/mm², vorzugsweise von im Wesentlichen 560 N/mm², aufweisen.

## Claims

1. A nailer (1) for nails (14) which are belted in the form of a coil (13) via at least one wire (15), with the heads (14') of which partially overlapping each other, said nailer (1) comprising an upper part (2), which is designed as hammer handle (4) at its one end (3) and has an angular stop (6) at its other end (5), and comprising a lever part (7), which is connected to the upper part (2) in an articulated manner and includes a nail magazine (11), a hammerhead (17) and a nail-feeding or-guiding means (18), wherein the hammerhead (17) has a drive channel (16) in which a striker (28) is guided, and wherein the nail-feeding or-guiding means (18) has a rocker arm (22) which is supported on a shaft (27) on the hammerhead (17) and which, upon activation of the nailer (1), displaces a feeder (19) with at least one feed claw (29) in an opening (17') in the hammerhead (17), and in the relaxed state of the nailer (1), the upper part (2) and the lever part (7) are forced apart by a resilient element (9, 10) as far as to a stop, **characterized in that** at least one stabilizing element is assigned to the nail magazine (11) via which the nails (14) are stabilized in their belted position by magnetic force.

2. The nailer according to claim 1, **characterized in that** an upper part (34) of the magazine, which is arranged adjacent the nail heads (14') of the nail coil (13), has at least one permanent magnet (35) as a stabilizing element.

3. The nailer according to claim 2, **characterized in that** several permanent magnets (35) are provided in the upper part (34) of the magazine which are preferably arranged to be peripherally-distributed in an even manner.

4. The nailer according to claim 3, **characterized in that** the upper part (34) of the magazine has recesses (36, 40) for receiving the permanent magnets (35).

5. The nailer according to any one of claims 2 to 4, **characterized in that** the upper part (34) of the magazine has a fixing plate (37) with at least two layers (38, 39), wherein one layer facing the nail heads (14') consists of a material which is harder than that of the other layer(s).

6. The nailer according to claim 5, **characterized in that** the layer (38) facing the nail heads (14') consists of a non-magnetizable steel, e.g. austenite.

7. The nailer according to claim 5 or 6, **characterized in that** the recesses (40) for receiving the permanent magnets (35) are provided in the second layer (39) which preferably consists of synthetic material, in particular polyamide, so that the permanent magnets (35) rest directly on the first layer (38).

8. The nailer according to any one of claims 2 to 7, **characterized in that** the permanent magnets (35) consist of a neodymium-iron-boron alloy.

9. The nailer according to any one of claims 2 to 8, **characterized in that** the permanent magnets (35) have a holding power of between 10 N/mm² and 30 N/mm², preferably of substantially 20 N/mm².

10. The nailer according to any one of claims 2 to 9, **characterized in that** the permanent magnets (35) are designed to be cylindrical and preferably have a diameter of between 5 mm and 15 mm, in particular of about 10 mm, and have a height of between 1 mm and 3mm, in particular of about 2 mm.

11. The nailer according to any one of claims 2 to 10, **characterized in that** the striker (28) comprises a magnetic material (41) at least in a front bearing area (28').

12. The nailer according to any one of claims 1 to 11, **characterized in that** the belted nails (14) are interconnected via two wires (15), wherein the wires (15) preferably have a strength of between 510 N/mm² and 610 N/mm², preferably of substantially 560 N/mm².

## Revendications

1. Dispositif de clouage (1) pour des clous (14) ceinturés via au moins un fil (15) sous la forme d'une galette (13), dont les têtes (14') se chevauchent les unes les autres partiellement, comprenant une partie supérieure (2) qui est réalisée à l'un de ses extrémités (3) sous forme de manche de marteau (4) et comportant à son autre extrémité (5) une butée en équerre (6), et une partie de levier (7), relié de façon articulée avec la partie supérieure (2), qui contient un magasin à clous (11), une tête de marteau (17) et un système d'avance et de guidage de clous (18), ladite tête de marteau (17) comprenant un canal de frappe (16), dans lequel est guidé un goujon percuteur (28), et dans lequel le système d'avance et de guidage de clous (18) comprend un levier à glissière (22), lequel est monté sur un axe (27) sur la tête de marteau (17) et, lors de l'actionnement du dispositif de clouage (1), déplace un corps d'avance (19) avec au moins une griffe d'avance (29) dans une ouverture (17') dans la tête de marteau (17), et dans la situation détendue du dispositif de clouage (1), la partie supérieure (2) et la partie de levier (7) sont repoussées en écartement par un élément à effet ressort (9, 10) jusqu'à une butée, **caractérisé en ce qu'**au moins un élément de stabilisation est associé au magasin à clous (11), élément de stabilisation au moyen duquel les clous (14) sont stabilisés dans leur situation ceinturée au moyen d'une force magnétique.

2. Dispositif de clouage selon la revendication 1, **caractérisé en ce qu'**une partie supérieure de magasin (34), agencée au voisinage des têtes de clous (14') de la galette (13) comprend à titre d'élément de stabilisation au moins un aimant permanent (35).

3. Dispositif de clouage selon la revendication 2, **caractérisé en ce que** plusieurs aimants permanents (35), agencés de préférence en répartition régulière du côté périphérique, sont prévus dans la partie supérieure (34) du magasin.

4. Dispositif de clouage selon la revendication 3, **caractérisé en ce que** la partie supérieure (34) du magasin comporte des échancrures (36, 40) pour la réception des aimants permanents (35).

5. Dispositif de clouage selon l'une des revendications 2 à 4, **caractérisé en ce que** la partie supérieure (34) du magasin comprend une plaque de fixation (37) avec au moins deux couches (38, 39), telles qu'une couche, tournée vers les têtes de clous (14'), est en un matériau plus dur que l'autre couche ou les autres couches.

6. Dispositif de clouage selon la revendication 5, **caractérisé en ce que** la couche (38) tournée vers les têtes de clous (14') est en acier non magnétique, par exemple en acier austénitique.

7. Dispositif de clouage selon la revendication 5 ou 6, **caractérisé en ce que** les échancrures (40) pour la réception des aimants permanents (35) sont prévues dans la seconde couche (39), laquelle est de préférence en matière plastique et en particulier en polyamide, de sorte que les aimants permanents (35) reposent directement sur la première couche (38).

8. Dispositif de clouage selon l'une des revendications 2 à 7, **caractérisé en ce que** les aimants permanents (35) sont en alliage néodyme-fer-bore.

9. Dispositif de clouage selon l'une des revendications 2 à 8, **caractérisé en ce que** les aimants permanents (35) présentent une force de maintien entre 10 N/mm² et 30 N/mm², de préférence sensiblement 20 N/mm².

10. Dispositif de clouage selon l'une des revendications 2 à 9, **caractérisé en ce que** les aimants permanents (35) sont réalisés cylindriques, et présentent de préférence un diamètre entre 5 mm et 15 mm, en particulier environ 10 mm, et une hauteur entre 1 mm et 3 mm, en particulier environ 2 mm.

11. Dispositif de clouage selon l'une des revendications 2 à 10, **caractérisé en ce que** le goujon percuteur (28) comprend, au moins dans une zone d'application antérieure (28'), un matériau magnétique (41).

12. Dispositif de clouage selon l'une des revendications 1 à 11, **caractérisé en ce que** les clous ceinturés (14) sont reliés les uns aux autres via deux fils (15), lesdits fils (15) présentant de préférence une résistance entre 510 N/mm² et 610 N/mm*, de préférence sensiblement 560 N/mm².
